# EUROPEAN PATENT APPLICATION

(11) **EP 2 819 378 A1**
(43) Date of publication of application: **31.12.2014**
(21) Application number: 13305895.8
(22) Date of filing: 27.06.2013
(51) Int. Cl.: H04L 29/08, G06F 17/30

(54) **Method and device for performing streaming queries**

(71) Applicant: ALCATEL LUCENT, 92100 Boulogne-Billancourt (FR)
(72) Inventor: Dobbelaere, Philippe, 2520 Ranst (BE)
(74) Representative: ALU Antw Patent Attorneys

(57) **Abstract**

Embodiments relate to a method for performing a streaming query (Qₛ), executed by a querying device, comprising iterating the following steps: - determining (U2) a window (W) in a sequence of streaming data, - updating (U3) a local database as a local cache version of an external database of a database server (3), and - determining (U4) a result (R) in function of data in the window (W) and in the local database (22). Updating (U3) the local database (22) comprises: - sending (U3a) an query (Qᵤ) including a stamp (t) to the database server (3), - receiving (U3b) a differential response (Resp) from the database server (3), wherein the differential response (Resp) comprises a current stamp of the database server (3), and specifies the changes of the external database (32) for the elements matching the query (Qᵤ) between the time corresponding to the stamp of the query (Qᵤ) and the time corresponding to the current stamp included in the differential response (Resp), and - constructing (U3c) the local database (22) in function of the differential response (Resp).

## Description

### FIELD OF THE INVENTION

The present invention relates to the field of streaming data. In particular, the invention relates to streaming queries over streaming data and an external database.

### BACKGROUND

Many applications are based on continuously collected data, in particular in the context of machine-to-machine and big data. A data stream or streaming data refer to a sequence of data.

A streaming query is a query performed on a data stream. Typically, a streaming query is handled by using a windowing mechanism: A sliding window delimiting a portion of the data stream is determined, and a result of the query is determined in function of the window. The process is iterated and thereby provides a stream of results.

When the streaming query relies on a data stream and on an external database, for example a traditional triplestore or a relational database, a local cache version of the external database is updated and accessed on every iteration of the windowing mechanism. Updating the local cache version of the external database involves reading and transferring the entire triplestore or at least one entire projected table of the relational database. Since the external database can be huge, this may require a lot of time and transmission bandwidth on each iteration of the windowing mechanism.

### SUMMARY

It is thus an object of embodiments of the present invention to propose a method and a device for performing a streaming query, which do not show the inherent shortcomings of the prior art.

Accordingly, embodiments relate to a method for performing a streaming query, executed by a querying device, comprising iterating the following steps:
- determining a window in a sequence of streaming data,
- updating a local database as a local cache version of an external database of a database server, and
- determining a result in function of data in the window and in the local database, wherein updating the local database for the first time comprises:
- sending a query for a full response to the database server,
- receiving a full response from the database server, wherein the full response comprises a current stamp of the database server, and specifies the elements of the external database matching the query, and
- constructing the local database in function of the full response,
wherein updating the local database for another time comprises:
- sending a query for a differential response, including the stamp received in the last response, to the database server,
- receiving a differential response from the database server, wherein the differential response comprises a current stamp of the database server, and specifies the changes of the external database for the elements matching the query between the time corresponding to the stamp of the query and the time corresponding to the current stamp included in the differential response, and
- constructing the local database in function of the differential response.

Correlatively, embodiments relate to a querying device for performing a streaming query, comprising means for executing the above-mentioned method.

The differential response may comprise a list of elements inserted in the external database and a list of elements deleted from the external database between the time corresponding to the stamp of the query and the time corresponding to the current stamp included in the differential response.

At least one of the responses may include a field for specifying whether it is a full response or a differential response.

Embodiments also relate to a method for managing a database, executed by a database server, comprising:
- receiving a query,
- determining whether said query is a query for a full response or a query for a differential response,
- if said query is a query for a full response, determining a full response, wherein the full response comprises a current stamp of the database server, and specifies the elements of the database matching the update query,
- if said query is a query for a differential response, determining a differential response, wherein the differential response comprises the current stamp of the database server, and specifies the changes of the database for the elements matching the query, between the time corresponding to a stamp of the query and the time corresponding to the current stamp of the database server,
- sending said response.

Correlatively, embodiments relate to a database server, comprising means for executing the above-mentioned method.

An element of the database may comprise a first field for specifying when the element was inserted in the database and a second field for specifying when the element was deleted from the database.

The method may comprise:
- receiving a command for inserting an element in the database,
- storing said element in the database and assigning the value of the current stamp to the first field of the element, and
- incrementing the value of the current stamp.

The method may comprise:
- receiving a command for removing an element from the database,
- assigning the value of the current stamp to the second field of the element, and
- incrementing the value of the current stamp.

Embodiments also relate to a computer program including instructions adapted to perform one of the above-mentioned methods when said program is executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a schematic view of a system for performing streaming queries,
Figures 2 to 4 are flowcharts illustrating the functioning of the system of figure 1, and
Figure 5 is a structural view of an apparatus of the system of figure 1.

### DESCRIPTION OF EMBODIMENTS

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

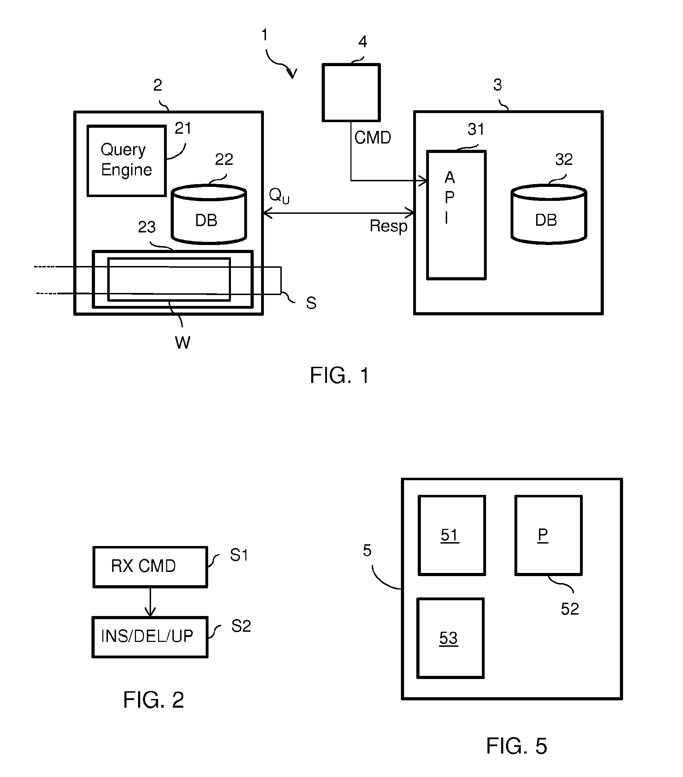

**Figure 1** shows a system 1 for executing streaming queries. The system 1 comprises a querying device 2 and a database server 3.

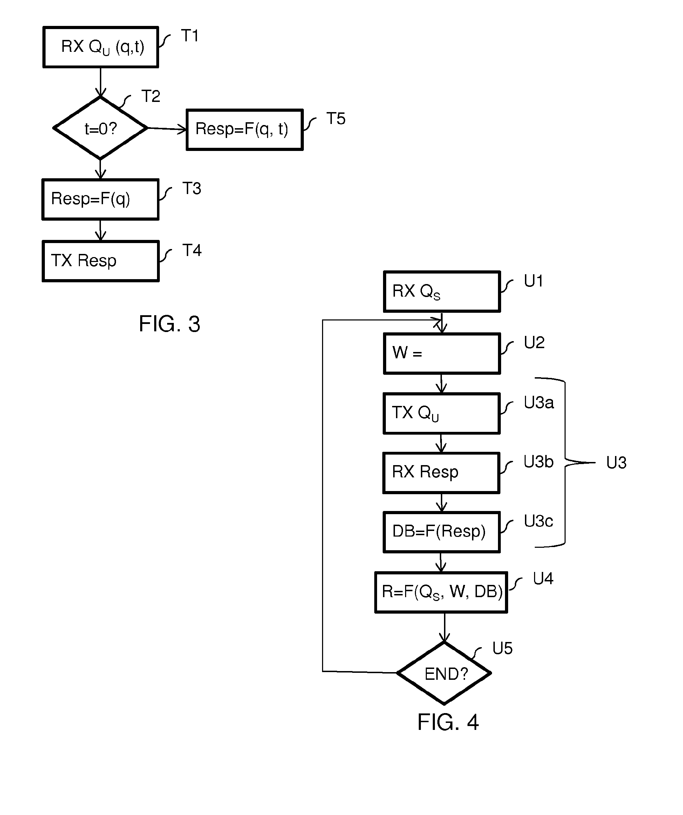

The database server 3 comprises a database 32 for storing data and an application programming interface (API) 31 for accessing the database 32. For example, the database 32 is a relational database and the API 31 allows interacting with the database 32 by using SQL (Structured Query Language). In another example, the database 32 is a triplestore and the API 31 allows interacting with the database 32 by using SPARQL (SPARQL Protocol and RDF Query Language). Interacting with the database 32 may include inserting data, deleting data, updating data, querying... The data stored in the database 32 may change. For example, the API 31 may receive commands CMD from a terminal 4 for inserting, deleting or updating data in the database 32. The structure of the database 32 and the managing of the database 32 in function of commands CMD and of update queries Qu from the querying device 2 are described hereafter with reference to figures 2 and 3.

The querying device 2 comprises a querying engine 21, a local database 22, and a buffer 23. The buffer 23 stores streaming data. The streaming data correspond to a sequence S of data obtained continuously by the querying device 2. The buffer 23 stores a portion of the sequence S, for example on a FIFO basis (First In First Out). The local database 22 is a local cache version of the database 32 of the database server 3. The querying engine 21 is in charge of performing streaming queries Qₛ on the streaming data (sequence S) and on the database 32 of the database server 3. The execution of a streaming query Qₛ is discussed in more detail hereafter with reference to figure 4.

**Figure 2** is a flowchart representing steps of a method for managing the database 32, executed by the database server 3.

The data elements of the database 32 include a first stamp (for example called insert_version_stamp) for specifying when the element was inserted in the database 32, and a second stamp (for example called delete_version_stamp) for specifying when the element was removed from the database 32. For example, in the case of a relational database, a table may include a column "insert_version_stamp" and a column "delete_version_stamp" in addition to the normal data of the table. In the example of a triplestore, a triple may include an insert_version_stamp and a delete_version_stamp in addition of the normal data of the triple, making it internally a quintuple.

The database server 3 has a current stamp for assigning a value to the insert_version_stamp and the delete_version_stamp. The current stamp of the database server 3 has a value which increases monotonously on each modification of the database 32. For example, the stamp is a combination of an UNIX epoch with a counter that is large enough not to overflow within a second. The counter is reset to zero when the more significant epoch ticks up a second, and is incremented on modification of the database 32 if the epoch is not changing. For example, the counter may be incremented when access to the database 32 changes from read to write or from write to read. Indeed, it is irrelevant that multiple writes would have different stamps, if no read has come in the middle of them.

When the database server 3 receives a command CMD for modifying the database 32 (step S1), it executes the commands and adapts the "insert_version_stamp" and the "delete_version_stamp" of the modified element (Step S2). More precisely, in an embodiment:
- In response to a command to insert an element in the database 32, the database server 3 inserts the element and sets its "delete_version_stamp" to zero and its "insert_version_stamp" to the current value of the stamp.
- In response to a command to delete an element in the database 32, the database server 3 sets its "delete_version_stamp" to the current value of the stamp and its "insert_version_stamp" to zero. The element is not removed from the database 32.
- In response to a command to update an element in the database 32, the database server 3 creates a new copy of the element in the database 32 with the updated value(s) and keeps the old version of the element. The "delete_version_stamp" of the old version of the element is set to the current value of the stamp and its "insert_version_stamp" is set to zero. Then the current value of the stamp is incremented and the "insert_version_stamp" of the new copy of the element is set to the (new) current value of the stamp and its "delete_version_stamp" is set to zero.

The handling of the current value of the stamp and the setting of the "insert_version_stamp" and the "delete_version_stamp" may be performed by the database server 3 in a transparent manner for the terminal 4. In other words, the command CMD may use the standard SQL or SPARQL format without taking into account the use of stamps in the database 32.

In a variant, instead of setting the "insert_version_stamp" and the "delete_version_stamp" to zero in the case described above, another predetermined value may be used. This predetermined value should be lower than any current value of the stamp.

**Figure 3** is a flowchart representing steps of the method for managing the database 32, executed by the database server 3.

The querying device 2 may send a query Q_{U} to the database server 3. The query Qu comprises query parameters q and a stamp t. The query parameters q may correspond to a normal SQL or SPARQL query, for example for selecting specific columns of a table of the database 32.

The first time that the querying device 2 sends a query Q_{U} to the database server 3, the query Q_{U} includes a stamp t = 0. Then, when it receives the query Q_{U} (step T1), the database server 3 determines if the stamp t is equal to zero (step T2). In the case a first query Q_{U} which includes a stamp t = 0, the database server 3 determines a response Resp in function of the query parameters q, by taking into account the entire content of the database 32 (step T3). In other words, the query Qu is processed like a normal SQL or SPARQL query and a full response Resp which include all the elements matching the query is determined. Then, the database server 3 sends the response Resp to the querying device 2 (step T4). The response Resp includes the current stamp of the database server 3. When it receives the full response Resp, the querying device 2 stores the stamp included in the response Resp and updates the local database 22 in function of the response Resp.

After the first time that the querying device 2 sends a query Q_{U} to the database server 3, the next queries Q_{U} include a stamp t equals to the stored value of the stamp included in the last response Resp received. When it receives a query Qu (step T1), the database server 3 determines if the stamp t is equal to zero (step T2). In the case a second or subsequent query Q_{U} which includes a stamp t different from zero, the database server 3 determines a response Resp in function of the query parameters q, by taking into account only the data element of the database 32 which have changed since the time corresponding to the stamp t of the query Qu (step T5). In other words, a differential response Resp specifying the changes of the database 32 between the stamp t of the query Qu and the current stamp of the database server 3 is determined. Then, the database server 3 sends the response Resp to the querying device 2 (step T4). The response Resp also includes the current stamp of the database server 3. When it receives the differential response Resp, the querying device 2 stores the stamp included in the response Resp and updates the local database 22 in function of the response Resp.

In an example, the response Resp includes a field "inserted" which lists the elements inserted in the database 32 since the stamp t, and a field "deleted" which lists the elements inserted in the database 32 since the stamp t (a change may be represented as a pair inserted/deleted), a field "type" which specify whether the response Resp is a full response or a differential response, and a field "stamp" which include the current stamp of the database server 3.

This may be illustrated by the following example. We assume that the database 32 comprises a table with a column x, which includes two elements A and B inserted respectively at stamp t1 and t2:

### Current stamp = t3

| Column X | delete_version_stamp | insert_version_stamp |
|---|---|---|
| A | 0 | t1 |
| B | 0 | t2 |

The database server 3 receives a query Q_{U} with query parameters q = "select Column_X from table" and stamp t = 0. The database server 3 responds with a response Resp = insert [A, B], delete [], "full", stamp = t3. When it receives the response Resp, the querying device 2 construct the full cache state [A, B].

Later, the querying device 2 sends a new query Q_{U} with the same query parameters q and stamp t = t3. Since Column_X has not changed since t3, the database server 3 responds with a response Resp = insert [], delete [], "diff", stamp = t4. When it receives the response Resp, the querying device 2 construct the full cache state [A, B].

Then, element B is removed from the database 32. Consequently, the database 32 stores:

### Current stamp = t5

| Column X | delete_version_stamp | insert_version_stamp |
|---|---|---|
| A | 0 | t1 |
| B | t5 | 0 |

Later, the querying device 2 sends a new query Q_{U} with the same query parameters q and stamp t = t4. Since Column_X has changed since t4, the database server 3 responds with a response Resp = insert [], delete [B], "diff", stamp = t5. When it receives the response Resp, the querying device 2 construct the full cache state [A].

Then, element C is inserted in the database 32. Consequently, the database 32 stores:

### Current stamp = t6

| Column X | delete_version_stamp | insert_version_stamp |
|---|---|---|
| A | 0 | t1 |
| B | t5 | 0 |
| C | 0 | t6 |

Later, the querying device 2 sends a new query Q_{U} with the same query parameters q and stamp t = t5. Since Column_X has changed since t5, the database server 3 responds with a response Resp = insert [C], delete [], "diff", stamp = t6. When it receives the response Resp, the querying device 2 construct the full cache state [A, C].

Then, element A is updated in the database 32 (for example from A to A_changed). Consequently, the database 32 stores:

### Current stamp = t8

| Column X | delete_version_stamp | insert_version_stamp |
|---|---|---|
| A_changed | 0 | t8 |
| A | t7 | 0 |
| B | t5 | 0 |
| C | 0 | t6 |

Later, the querying device 2 sends a new query Q_{U} with the same query parameters q and stamp t = t6. Since Column_X has changed since t6, the database server 3 responds with a response Resp = insert [A_changed], delete [A], "diff", stamp = t8. When it receives the response Resp, the querying device 2 construct the full cache state [A_changed, C].

In the embodiment described, the querying engine 2 sends two types of query Qu, namely a query for a full response which includes a stamp t = 0, and a query for a differential response which include a stamp t different from zero. In a variant, the two types of queries may be differentiated in a different manner. For example, instead of using a stamp t = 0 for requesting a full response Resp, another predetermined value to may be used. This predetermined value to should be lower than any current value of the stamp, for example by using a predetermined old epoch value in the case of a stamp based on epoch. In another example, the query includes a field which may take the values "full" and "differential".

The method for managing the database 32 described with reference to figures 2 and 3 has the consequence that the content of the database 32 grows continuously. In order to limit the size of the database 32, in an embodiment, the database server 32 deletes (in other words removes) all the elements having a "delete_version_stamp" different from zero, for example in response to a command from an administrator and/or on a periodic basis. The response Resp to the first query Q_{U} after such deletion step is a full response, even if the query Q_{U} includes a stamp t different from zero (in other words even if it is a query for a differential response).

Similarly, the response Resp to the first query Q_{U} after the structure of the database 32 has been modified is a full response, even if the query Q_{U} includes a stamp t different from zero.

Finally, the response Resp to a query which does not include a stamp t (for example a normal SQL or SPARQL query) is also a full response.

**Figure 4** is a flowchart of a method for performing a streaming query, executed by the querying device 2.

Initially, the querying device 2 receives a streaming query Q_{S} to be processed by the querying engine 21 (step U1). The streaming query Q_{S} is received for example from an external device (not shown) or from an application executed by the querying device 2 (not shown). The streaming query Q_{S} concerns the sequence S and the external database 32.

Then, the querying device 2 determines a window W which delimits data in the sequence S (step U2) and updates the local database 22 (step U3). Figure 4 shows step U2 followed by step U3, but this order may be changed or the steps may be executed in parallel.

Windowing mechanisms for determining a window in order to perform a streaming query are known to the skilled person and will not be described in details.

Updating the local database 22 comprises sending a query Qu to the database server 3 (step U3a), receiving a response Resp from the database server 3 (step U3b), and constructing the local database 22 as a local cache version of the external database 32 in function of the response Resp (step U3c).

This update mechanism between the local database 22 and the external database 32 needs not caching the full content of the external database 32. In contrast, the query Q_{U} may specify the relevant data needed at the querying device 2 for the streaming query Q_{S}. For example, the updated data may be projected based on the given SQL, SPARQL or equivalent query expressions. Depending on the query algebra, even a more substantial part of the query plan (not only projection but even selection, join...) could be pushed to the database server 3.

For example, if the query plan can be represented by the following operator flow:
Database server 3 → flowA → \
   → Joined flowC → result
Window W → flowB → /
then the complete flowA can be pushed to the server. The database server 3 may create an intermediate table (SQL) or graph (SPARQL) representing the situation between flowA and flowC, just as in the SPARQL CONSTRUCT clause.

Then, the querying device 2 determines a result R of the streaming query Q_{S} in function of the streaming query Q_{S}, of the data in the window W and of the data in the local database 22 (step U4).

Steps U2 to U4 are iterated until an end condition is satisfied at step U5, thereby providing a stream of results R.

As explained with reference with figures 3, updating the local database 22 at step U3 comprises determining and receiving a full response only the first time step U3 is executed. The second and subsequent time, only a differential response is determined and received, based on the last stamp. Since the differential response may be significantly smaller than the full response, the local database 22 may be updated without requiring a lot of time (both at the database server 3 and at the querying device 2) and transmission bandwidth. Thus, the streaming query Q_{S} may be executed efficiently.

In an embodiment, the querying device 2 determines at least one index for the local database 22. In that case, step U4 of determining a result R may comprises determining the result R by using said at least one index. The use of an index or indices at the local database 22 speeds up the determination of the result R. Although it would be possible to derive the local index from indices at the database server 3, determining the index at the cache querying device 2 solves the scalability problem with respect to joins in distributed graph databases. Indeed, the index needs not be determined for the entire external database 32, but only for the data that is relevant to the streaming query QS and which has been cached in the local database 22. Moreover, this removes the absolute need for an index at the database server 3.

An example of streaming query Q_{S} related to a network of sensors will now be described.

In this example, the database 32 comprises, for a plurality of sensors: A sensor ID, a measurement type for specifying the type of measurement (temperature, pressure...), a sensor type for specifying whether the sensor is mobile or fixed, and location data (for example latitude and longitude) for specifying the sensor's location. The sequence S comprises streaming data continuously provided by the sensors: Sensor ID, measurement value.

The streaming query Q_{S} aims at obtaining the temperature measurement and the location of fixed temperature sensors in an area. Although streaming extensions to query languages are not fully standardized yet, the skilled person is capable of expressing such query.

On every iteration of steps U2-U4, the querying engine 2 determines a window W in the sequence S of measurement value, and updates the local database 22 by querying the database 32 for the sensors which have "temperature" as measurement type and "fixed" as sensor type. The first time, the database server 3 provides the full list of sensors matching the query. After that, the database server 3 only provides the list of sensors matching the query which have been added, removed or modified in the database 32. The querying device 2 may then determines the results R which include a list of temperature measurement and locations, corresponding to fixed temperature sensors.

**Figure 5** is a structural view of an apparatus 5, which may be for example the database server 3 or the querying device 2 of the system 1. The apparatus 5 comprises a processor 51, a memory 52 and communication interface 53. The processor 51 allows executing computer programs stored in the memory 52. The methods of figures 2 to 4 may correspond to the execution of such a computer program P. The communication interface 53 allows communicating with the other devices of the system 1.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for performing a streaming query (Q_{S}), executed by a querying device (2), comprising iterating the following steps:
- determining (U2) a window (W) in a sequence (S) of streaming data,
- updating (U3) a local database (22) as a local cache version of an external database (32) of a database server (3), and
- determining (U4) a result (R) in function of data in the window (W) and in the local database (22),
wherein updating (U3) the local database (22) for the first time comprises:
- sending (U3a) a query (Q_{U}) for a full response to the database server (3),
- receiving (U3b) a full response (Resp) from the database server (3), wherein the full response (Resp) comprises a current stamp of the database server (3), and specifies the elements of the external database (32) matching the query (Qu), and
- constructing (U3c) the local database (22) in function of the full response (Resp), wherein updating (U3) the local database (22) for another time comprises:
- sending (U3a) a query (Qu) for a differential response, including the stamp (t) received in the last response (Resp), to the database server (3),
- receiving (U3b) a differential response (Resp) from the database server (3), wherein the differential response (Resp) comprises a current stamp of the database server (3), and specifies the changes of the external database (32) for the elements matching the query (Q_{U}) for a differential response between the time corresponding to the stamp of said query (Q_{U}) and the time corresponding to the current stamp included in the differential response (Resp), and
- constructing (U3c) the local database (22) in function of the differential response (Resp).

2. Method according to claim 1, wherein said differential response (Resp) comprises a list of elements inserted in the external database (32) and a list of elements deleted from the external database (32) between the time corresponding to the stamp of query (Qu) and the time corresponding to the current stamp included in the differential response (Resp).

3. Method according to one of claims 1 and 2, wherein at least one of said responses (Resp) includes a field for specifying whether it is a full response or a differential response.

4. Method according to one of claims 1 to 3, comprising:
- determining an index for the local database (22),
- using said index for determining said result (R).

5. Method according to one of claims 1 to 4, wherein said query (Qu) for a full response include a stamp equal to a predetermined value, and said query (Qu) for a differential response include a stamp different from said predetermined value.

6. Computer program (P) including instructions adapted to perform the method of one of claims 1 to 5 when said program is executed by a computer (5).

7. Querying device (2) for performing a streaming query (Q_{S}), comprising means (51, 52, 53) for iterating the following steps:
- determining (U2) a window (W) in a sequence (S) of streaming data,
- updating (U3) a local database (22) as a local cache version of an external database (32) of a database server (3), and
- determining (U4) a result (R) in function of data in the window (W) and in the local database (22),
wherein updating (U3) the local database (22) for the first time comprises:
- sending (U3a) a query (Q_{U}) for a full response to the database server (3),
- receiving (U3b) a full response (Resp) from the database server (3), wherein the full response (Resp) comprises a current stamp of the database server (3), and specifies the elements of the external database (32) matching the query (Qu), and
- constructing (U3c) the local database (22) in function of the full response (Resp), wherein updating (U3) the local database (22) for another time comprises:
- sending (U3a) a query (Qu) for a differential response, including the stamp (t) received in the last response (Resp), to the database server (3),
- receiving (U3b) a differential response (Resp) from the database server (3), wherein the differential response (Resp) comprises a current stamp of the database server (3), and specifies the changes of the external database (32) for the elements matching said query (Q_{U}), between the time corresponding to the stamp of said query (Qu) and the time corresponding to the current stamp included in the differential response (Resp), and
- constructing (U3c) the local database (22) in function of the differential response (Resp).

8. Method for managing a database (32), executed by a database server (3), comprising:
- receiving (T1) a query (Qu),
- determining (T2) whether said query (Q_{U}) is a query for a full response or a query for a differential response,
- if said query (Qu) is a query for a full response, determining (T3) a full response (Resp), wherein the full response (Resp) comprises a current stamp of the database server (3), and specifies the elements of the database (32) matching the uery (Qu),
- if said query (Qu) is a query for a differential response including a stamp (t), determining (T5) a differential response (Resp), wherein the differential response (Resp) comprises the current stamp of the database server (3), and specifies the changes of the database (32) for the elements matching the query (Q_{U}), between the time corresponding to the stamp of the query (Q_{U}) and the time corresponding to the current stamp of the database server (3),
- sending (T4) said response (Resp).

9. Method according to claim 8, wherein an element of the database (32) comprises a first field for specifying when the element was inserted in the database (32) and a second field for specifying when the element was deleted from the database (32).

10. Method according to claim 9, comprising:
- receiving (S1) a command (CMD) for inserting an element in the database (32),
- storing (S2) said element in the database (32) and assigning the value of the current stamp to the first field of the element, and
- incrementing the value of the current stamp.

11. Method according to one of claims 9 and 10, comprising:
- receiving (S1) a command (CMD) for removing an element from the database (32),
- assigning the value of the current stamp to the second field of the element, and
- incrementing the value of the current stamp.

12. Method according to one of claims 8 to 11, wherein said query (Qu) for a full response include a stamp equal to a predetermined value, and said query (Qu) for a differential response include a stamp different from said predetermined value, and wherein whether said query (Q_{U}) is a query for a full response or a query for a differential response comprises determining is determined in function of the stamp of the query (Qu).

13. Computer program (P) including instructions adapted to perform the method of one of claims 8 to 12 when said program is executed by a computer (5).

14. Database server for managing a database, comprising:
- means (51, 52, 53) for receiving a query (Qu),
- means (51, 52, 53) for determining whether said query (Q_{U}) is a query for a full response or a query for a differential response,
- means (51, 52, 53) for determining (T3) a full response (Resp), wherein the full response (Resp) comprises a current stamp of the database server (3), and specifies the elements of the database (32) matching the query (Q_{U}), if said query (Qu) is a query for a full response,
- means (51, 52, 53) for determining (T5) a differential response (Resp), wherein the differential response (Resp) comprises the current stamp of the database server (3), and specifies the changes of the database (32) for the elements matching the query (Q_{U}), between the time corresponding to a stamp included in the query (Q_{U}) and the time corresponding to the current stamp of the database server (3), if said query (Qu) is a query for a differential response,
- means (51, 52, 53) for sending (T4) said response (Resp).

15. System (1) comprising a querying device (2) according to claim 7 and a database server (3) according to claim 14.
